# EUROPEAN PATENT APPLICATION

(11) **EP 1 884 862 A1**
(43) Date of publication of application: **06.02.2008**
(21) Application number: 06118104.6
(22) Date of filing: 28.07.2006
(51) Int. Cl.: G06F 1/16

(54) **Computer system with extended module**

(71) Applicant: Solytech Enterprise Corporation, Taipei (TW)
(72) Inventor: Chien, Chieh-Nan, Taipei (TW)
(74) Representative: Muttock, Neil John

(57) **Abstract**

A computer system (100) including a mainframe module (1), an extended module (2, 2a) splitly located from the mainframe module (1), and an integrated connection cable (3) connected between the mainframe module (1) and the extended module (2, 2a). The mainframe module (1) includes a mainframe system control circuit (11, 11a), a power supply (12) for supplying a power source to the mainframe system control circuit (11, 11a) and the extended module (2, 2a), and at least one signal port (15, 16; 15a, 16a). The extended module (2, 2a) includes a power connection port (21) connecting to the power supply (12), and at least one signal port (27, 28; 27a, 28) connecting to the signal port (15, 16; 15a, 16a) of the mainframe module (1) and connecting to at least one signal input and output device and a multimedia processing device (6).

## Description

### FIELD OF THE INVENTION

The present invention relates to a computer system, and in particular to a computer system with an extended module.

### BACKGROUND OF THE INVENTION

With the development of computers and related technologies, computers are now widely used in industry and business occasions, offices, schools, and even living environments. Software and hardware such as compact disk drive, floppy, re-writable compact disk drive, memory modules, hard disks and various kinds of transmission interfaces and connection ports of the computer systems of the majority are integrated in the mainframe casings. Moreover, in order to enhance the variety and capability of the computer systems, many computer users add various additional devices with various functions inside the mainframe casings.

### SUMMARY OF THE INVENTION

To make a comprehensive survey of the computer systems, we can discover that most software and hardware of the computers are integrated in a mainframe casing of the computer. Although computers of this kind are widely used in people's livelihood, they are of extreme inconvenience when it comes to the arrangement, mainly because of the largeness in size of the mainframe casings of the computers and the limited spacing on the working table or the computer table to place a huge mainframe module. In addition, to place the mainframe module on the table with difficulty is a true disaster from an aesthetic point of view.

In the light of above problems, most users manage to arrange the mainframe module of the computer under the table in order to effectively use the spacing above the table. The operating of the mainframe module of the computer such as turning on the computer, using the compact disk drive and all kinds of transmission interfaces and connection ports, however, is very inconvenient due to arrangement of the mainframe module, that is, users have to bend under the table to reach the mainframe module in order to operate the computer.

The primary object of the present invention, therefore, is to provide a computer system with an extended module, wherein devices with higher frequency of use are arranged in the extended module, and the extended module is capable of being arranged at a place easy to access.

Further object of the present invention is to provide an extended module capable of controlling the mainframe module of the computer. The user, therefore, is able to control the mainframe system control circuit of the mainframe module, which is arranged at a place harder to access, by the extended module, which is arranged at a place easier to access.

To realize the above objects, the present invention installs a computer system with an extended module, which includes a mainframe module, an extended module splitly located from the mainframe module, and an integrated connection cable connected between the mainframe module and the extended module. The mainframe module includes a mainframe module casing, a power supply, a mainframe system control circuit, which further includes a central processing unit, an audio output interface and a signal bus interface, at least one power output port and at least one signal port.

The extended module includes an extended module casing; a power connection port corresponding to the power output port of the mainframe; at least one signal port corresponding to the signal port of the mainframe; at least one signal input and output unit connecting to the signal port of the extended module for inputting/outputting signals of the signal port; a multimedia processing device connecting to the signal ports of the extended module for processing multimedia data; and an audio input and output unit connecting to the multimedia processing device and the audio output interface of the mainframe module by an audio signal line of the integrated connection cable for outputting the audio signals generated by the multimedia processing device and inputting audio signals to the multimedia processing device, and outputting audio signals generated by the audio output interface.

In the preferred embodiment of the present invention, the extended module casing is further arranged with a system starting switch for controlling the activation of the mainframe system control circuit. Besides, the extended module casing is further arranged with USB connection ports, audio output sockets, audio input sockets, 1394 connection ports and memory module reading device.

In another embodiment of the present invention, the audio output interface of the mainframe system control circuit is connected to an audio converting interface for converting the audio signals generated from the audio output interface and transferring the audio signals to the signal port of the extended module.

In comparison with the conventional technologies, the present invention provides a computer system with an extended module, wherein devices with higher frequency of use are arranged in the extended module, and the extended module is capable of being arranged at a place easy to access. The user, therefore, is able to control the mainframe system control circuit of the mainframe module, which is arranged at a place harder to access, by the extended module, which is arranged at a place easier to access.

These and other objects, features and advantages of the invention will be apparent to those skilled in the art, from a reading of the following brief description of the drawings, the detailed description of the preferred embodiment, and the appended claims.

### BRIEF DESCRIPTION OF THE DRAWINGS

Fig. 1 shows an application of the computer system with an extended module in accordance with the present invention;
Fig. 2 is a front perspective view of the extended module in accordance with the present invention;
Fig. 3 is a rear perspective view of the extended module in accordance with the present invention;
Fig. 4 is a front perspective view of the mainframe module in accordance with the present invention;
Fig. 5 is a rear perspective view of the mainframe module in accordance with the present invention;
Fig. 6 is a block diagram of the computer system with an extended module in accordance with a first embodiment of the preferred embodiment of the present invention; and
Fig. 7 is a block diagram of the computer system with an extended module in accordance with a second embodiment of the present invention.

### DETAILED DESCRIPTION OF THE PREFERRED EMBODIMENTS

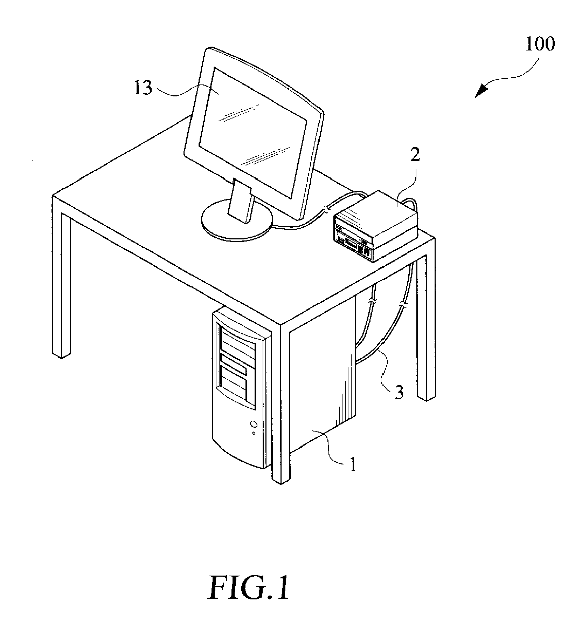

With reference to the drawings and in particular to Fig. 1, which shows an application of the computer system with an extended module in accordance with the present invention, a computer system 100 includes a mainframe module 1, an extended module 2 splitly located from the mainframe module 1, and an integrated connection cable 3 connected between the mainframe module 1 and the extended module 2.

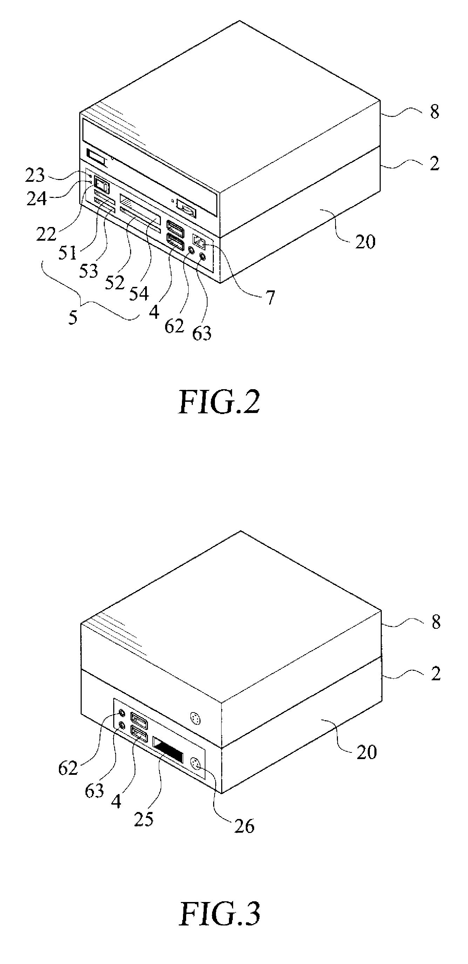

Please refer to Fig. 2 that is a front perspective view of the extended module in accordance with the present invention. As shown in the figure, the extended module 2 includes an extended module casing 20, and a system starting switch 22, a power indicating light 23, a system status indicating light 24, at least one USB(Universal Serial Bus) connection port 4, a memory module reading device 5, an audio output socket 62, an audio input socket 63 and a serial bus interface standard connection port 7, such as a FireWire (also known as IEEE 1394), are arranged on the front side of the extended module casing 20. In addition, a compact disk drive 8 is piled up on the extended module 2.

The memory module reading device 5 includes a Secured Digital socket 51, a Smart Media or a Multi-Media Card socket 52, a Memory Stick socket 53, and a IBM Card or a Compact Flash socket 54?

As shown in Fig. 3, which is a rear perspective view of the extended module in accordance with the present invention, an integrated connection cable connection port 25, a power line connection port 26, a least one USB connection port 4, an audio output socket 62 and an audio input socket 63 are arranged on the rear side of the extended module casing 20.

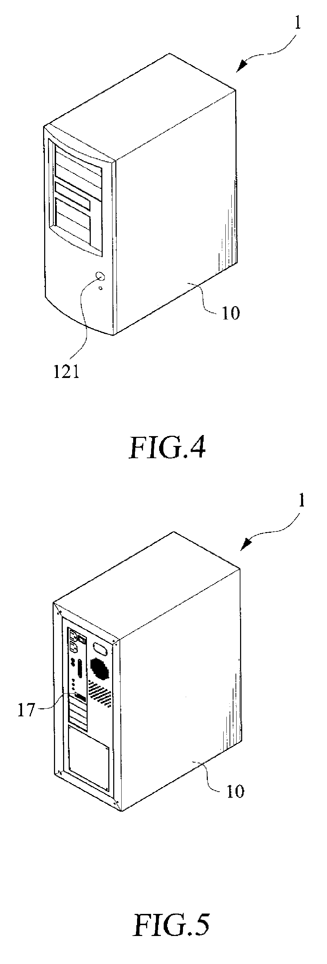

As shown in Fig. 4 and Fig. 5, which are a front perspective view and a rear perspective view, respectively, of the mainframe in accordance with the present invention, the mainframe module 1 includes a mainframe casing 10, and a power switch 121 and an integrated connection cable connection port 17 are arranged on the mainframe casing 10. The integrated connection cable 3 connects the mainframe module 1 and the extended module 2 by connecting the integrated connection cable connection port 17 of the mainframe casing 10 and the integrated connection cable connection port 25 of the extended module casing 20.

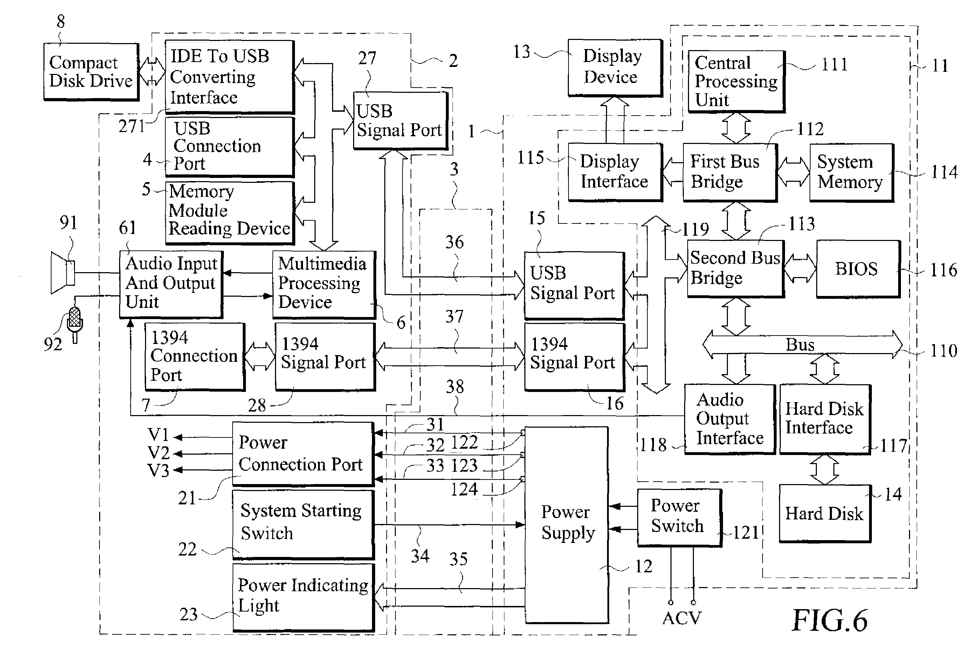

Please refer to Fig. 6 that is a block diagram of the computer system with an extended module in accordance with the preferred embodiment of the present invention. As shown in the figure, the mainframe module 1 includes a mainframe system control circuit 11 and a power supply 12, wherein the mainframe system control circuit 11 includes a central processing unit 111, a first bus bridge 112 (also known as the North Bridge) and a second bus bridge 113 (also known as the South Bridge).

The central processing unit 111 is connected to the first bus bridge 112 by a system bus, and the first bus bridge 112 is electrically connected to a system memory 114 and a display interface 115 (such as an AGP Interface), which connects the first bus bridge 112 to the display device 13. The second bus bridge 113 is connected to a BIOS (Basic Input and Output System) 116, and is connected to a hard disk interface 117 through a bus 110 and an audio output interface 118, wherein the hard disk interface 117 connects a hard disk 14. Besides, the second bus bridge 113 is connected to a USB signal port 15 and a 1394 signal port 16 by a signal bus interface 119, which may be a conventional PCI bus.

The power supply 12 is capable of supplying a number of power output ports 122, 123, and 124 thereof to the mainframe system control circuit 11 from an alternating current power source ACV

The extended module 2 is connected to the mainframe module 1, as shown in Fig. 1, by an integrated connection cable 3, which includes three power lines 31, 32 and 33, a system starting controlling line 34, an indicating light signal line 35, two signal lines 36, 37 and an audio signal line 38. The power lines 31, 32 and 33 are used to supply power source from the power supply 12 of the mainframe module 1 to the extended module 2, the signal lines 36 and 37 are used to transmit signals between the mainframe module 1 and the extended module 2, and the audio signal line 38 is used to transmit audio signals generated from the audio output interface 118.

The extended module 2 includes a power connection port 21, a system starting switch 22, and a power indicating light 23. The power connection port 21 is connected to the power output ports 122, 123 and 124 of the power supply 12 of the mainframe module 1 by the power lines 31, 32 and 33 of the integrated connection cable 3 respectively for supplying three output voltages V1, V2 and V3 with different predetermined voltage levels to the extended module 2.

The system starting switch 22 is arranged on the extended module casing 20 as shown in Fig. 2, and it is connected to the power supply 12 of the mainframe module 1 by the system starting controlling line 34 of the integrated connection cable 3 for controlling the starting of the mainframe system control circuit 11. In application, the system starting switch 22 may be connected to the motherboard (not shown in the figure) of the mainframe module 1 by the system starting controlling line 34 of the integrated connection cable 3, and the motherboard may be able to start the mainframe system control circuit 11 by a systematic power starting controlling line (not shown) connected to the power supply 12.

The power indicating light 23 is arranged on the extended module 20 as shown in Fig. 2, and it is electrically connected to the power supply 12 of the mainframe module 1 by the indicating light signal line 35 of the integrated connection cable 3 for indicating the power-supplying status of the power supply 12. The system status indicating light 24 is capable of indicating the system operation status of the mainframe system control circuit 11.

The extended module 2 further includes a USB signal port 27, which is connected to the USB port 15 of the mainframe module 1 by the signal line 36 of the integrated connection cable 3, and a 1394 signal port 28, which is connected to the 1394 signal port 16 of the mainframe module 1 by the signal line 37 of the integrated connection cable 3.

The USB signal port 27 is connected to an IDE to USB converting interface 271, which connects to the compact disk drive 8, the USB connection port 4 and the memory module reading device 5 and a multimedia processing device 6. The USB connection port 4 and the memory module reading device 5 are used as signal input and output units for inputting and outputting signals from the USB signal port 27. The multimedia processing device 6 is connected to an audio input and output unit 61 for outputting the audio signals generated by the multimedia processing device 6 and inputting audio signals to the multimedia processing device 6.

The audio input and output unit 61 is further connected to the audio output interface 118 of the mainframe system control circuit 11 by the audio signal line 38 of the integrated connection cable 3 for outputting the audio signals generated by the audio output interface 118. The audio input and output unit 61 is also connected to an audio output socket 62, which is used to plug in an audio output device 91, and an audio input socket 63, which is used to plug in an audio input device 92, as shown in Fig. 2. Moreover, the 1394 signal port 28 is connected to a 1394 connection port 7 for plugging in a 1394 connection line (not shown).

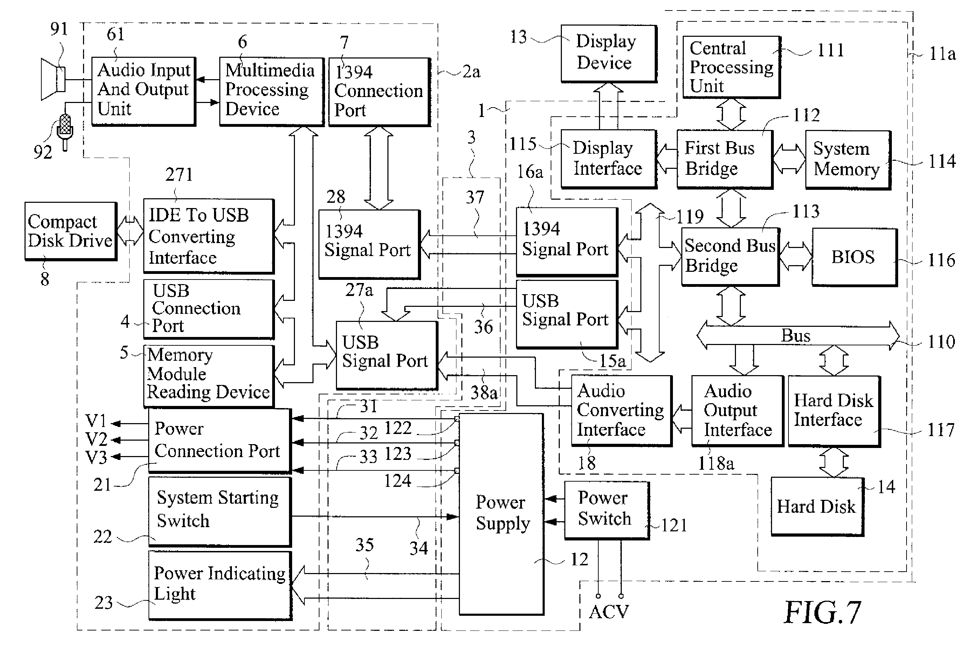

With reference to Fig. 7, which is a block diagram of the computer system with an extended module in accordance with a second embodiment of the present invention, the difference between the second embodiment and the first embodiment is that the audio output interface 118a of the mainframe system control circuit 11 a is connected to an audio converting interface 18, which is connected to the USB signal port 27a of the extended module 2a by an audio signal line 38a of the integrated connection cable 3 for converting the audio signals generated from the audio output interface 118a and transferring the audio signals to the USB signal port 27a of the extended module 2a.

In application, the power supply is able to supply output voltages V1, V2 and V3 to the extended modules 2 and 2a even when the mainframe system control circuits 11 and 11 a are not activated, hence enabling the extended modules 2 and 2a to activate by themselves without turning on the mainframe system control circuits 11 and 11 a of the mainframe module 1 on the premise. On the other hand, when the mainframe system control circuits 11 and 11a of the mainframe module 1 and the power supply 12 are activated at the same time, controlling the activation of the mainframe system control circuits 11 and 11a by the system starting switch 22 on the extended module casing 20 is necessary.

The extended modules 2 and 2a may also connect a power line by the power line connection port 26 on the extended module casing 20 for supplying the power source to the extended modules 2 and 2a. The extended modules 2 and 2a may serve as an extended device for a personal computer.

The extended modules 2 and 2a are capable of altering their arrangements and the arrangements of the devices in the extended module casing 20 in accordance with the application of the computer system 100 and the demands of the users.

While the invention has been described in connection with what is presently considered to the most practical and preferred embodiments, it is to be understood that the invention is not to be limited to the disclosed embodiments, but on the contrary, is intended to cover various modifications and equivalent arrangement included within the spirit and scope of the appended claims.

## Claims

1. A computer system (100), comprising:
a mainframe module (1), comprising:
a mainframe casing (10);
a mainframe system control circuit (11, 11a) comprising a central processing unit (111), an audio output interface (118, 118a) and a signal bus interface (119);
a power supply (12) for supplying a power source with a predetermined voltage level to the mainframe system control circuit (11, 11a);
at least one power output port (122, 123, 124) connecting to the power supply (12);
at least one signal port (15, 16; 15a, 16a) connecting to the signal bus interface (119) of the mainframe system control circuit (11, 11a);
an extended module (2, 2a) splitly located from the mainframe module (1), comprising:
an extended module casing (20);
a power connection port (21) corresponding to the power output port (122, 123, 124) of the mainframe module (1);
at least one signal port (27, 28; 27a, 28) corresponding to the signal port (15, 16; 15a, 16a) of the mainframe module (1);
at least one signal input and output unit connecting to the signal port (27; 27a) of the extended module (2, 2a) for inputting/outputting signals of the signal port (27; 27a);
an integrated connection cable (3) connected between the mainframe module (1) and the extended module (2, 2a), comprising:
at least one power line (31, 32, 33) connecting to the power output port (122, 123, 124) of the mainframe module (1) and the power connection port (21) of the extended module (2, 2a) for providing power source from the power supply (12) of the mainframe (1) to the extended module (2, 2a); and
at least one signal line (36, 37) connecting to the signal port (15, 16; 15a, 16a) of the mainframe module (1) and the signal port (27, 28; 27a, 28) of the extended module (2, 2a) for transceiving signals between the mainframe module (1) and the extended module (2, 2a).

2. The computer system (100) as claimed in claim 1, **characterized in that** the extended module (2, 2a) further comprises a multimedia processing device (6) connecting to the signal port (27; 27a) of the extended module (2, 2a).

3. The computer system (100) as claimed in claim 2, **characterized in that** the extended module (2, 2a) further comprises an audio input and output unit (61) connecting to the multimedia processing device (6) for outputting the audio signals generated by the multimedia processing device (6) and inputting audio signals to the multimedia processing device (6).

4. The computer system (100) as claimed in claim 3, **characterized in that** the audio output interface (118, 118a) of the mainframe system control circuit (11, 11a) is connected to the audio input and output unit (61) of the extended module (2, 2a) through an audio signal line (38; 38a) of the integrated connection cable (3) for outputting the audio signals from the audio output interface (118, 118a) by the audio input and output unit (61).

5. The computer system (100) as claimed in claim 1, **characterized in that** the audio output interface (118a) is connected to an audio converting interface (18) that is connected to the signal port (27a) of the extended module (2, 2a) through an audio signal line (38a) of the integrated connection cable (3) for converting the audio signals from the audio output interface (118a) and transferring the audio signals to the signal port (27a).

6. The computer system (100) as claimed in claim 1, **characterized in that** the extended module (2, 2a) further comprises a system starting switch (22) connected to the power supply (12) of the mainframe module (1) through a system starting controlling line (34) of the integrated connection cable (3) for controlling the starting of the mainframe system control circuit (11, 11a).

7. The computer system (100) as claimed in claim 1, **characterized in that** the extended module (2, 2a) further comprises an indicating light (23, 24) arranged on the extended module casing (20) of the extended module (2, 2a) and connected to the power supply (12) of the mainframe module (1) through an indicating light signal line (35) of the integrated connection cable (3).

8. The computer system (100) as claimed in claim 7, **characterized in that** the indicating light further comprises a system status indicating light (24).

9. The computer system (100) as claimed in claim 1, **characterized in that** the signal input and output unit of the extended module (2, 2a) comprises a USB connection port (4), a serial bus interface standard connection port (7) and a memory module reading device (5).

10. A computer system (100), comprising:
an extended module (2, 2a), comprising:
an extended module casing (20);
a power output port (122, 123, 124) for supplying power source to the extended module (2, 2a);
at least one signal port (15, 16; 15a, 16a) connecting to the computer system (100) for transceiving signals between the computer system (100) and the extended module (2, 2a); and
at least one signal input and output unit connecting to the signal port (27; 27a) of the extended module (2, 2a) for inputting and outputting signals of the signal port (27, 28; 27a, 28).

11. The computer system (100) as claimed in claim 10, **characterized in that** the extended module (2, 2a) further comprises a multimedia processing device (6) connecting to the signal port (27; 27a) of the extended module (2, 2a) for processing multimedia data.

12. The computer system (100) as claimed in claim 11, **characterized in that** the extended module (2, 2a) further comprises an audio input and output unit (61) connecting to the multimedia processing device (6) for outputting the audio signals generated by the multimedia processing device (6) and inputting audio signals to the multimedia processing device (6).

13. The computer system (100) as claimed in claim 10, **characterized in that** the signal input and output unit of the extended module (2, 2a) comprises a USB connection port (4), a serial bus interface standard connection port (7) and a memory module reading device (5).

14. The computer system (100) as claimed in claim 10, **characterized in that** the extended module casing (20) of the extended module (2, 2a) further comprises an audio output socket (62) and an audio input socket (63).
